# EUROPÄISCHE PATENTSCHRIFT

(11) **EP 2 427 605 B1**
(45) Veröffentlichungstag und Bekanntmachung des Hinweises auf die Patenterteilung: **01.07.2015**
(21) Anmeldenummer: 10718891.4
(22) Anmeldetag: 04.05.2010
(51) Int. Cl.: E04B 2/96, E02B 3/10, E02B 7/22, E02D 17/18, E02D 29/02, F16B 5/00

(54) **VERBINDUNG UND STANDSÄULE**
CONNECTION AND SUPPORT COLUMN
LIAISON ET COLONNE DE SUPPORT

(30) Priorität: 06.05.2009 AT 6882009
(43) Veröffentlichungstag der Anmeldung: 14.03.2012
(73) Patentinhaber: Baumann/Holding/1886 GmbH, 4342 Baumgartenberg/Perg (AT)
(72) Erfinder: BAUMANN, Franz, A-4342 Baumgartenberg/Perg OÖ (AT); WÖRAN, Wolfgang, A-4342 Baumgartenberg/Perg OÖ (AT)
(74) Vertreter: Grabherr, Claudia
(86) Internationale Anmeldenummer: PCT/EP2010/002719
(87) Internationale Veröffentlichungsnummer: WO 2010/127828

(56) Entgegenhaltungen:
- EP-A1- 0 570 620
- EP-A1- 0 754 804
- EP-A2- 0 960 985
- EP-A2- 1 580 341
- WO-A2-2008/014765
- DE-A1- 3 732 534
- DE-A1- 10 306 002
- DE-C1- 4 203 316
- DE-U1-202004 001 196
- FR-A1- 2 330 898

## Beschreibung

Die Erfindung betrifft eine Verbindung zwischen einem Basiselement und einem davon abstehenden Stegelement

Bei der Herstellung von Metallkonstruktionen wie zB Fassaden für Bauwerke oder auch für Skandsäulen, Behältnissen und Verkleidungen ist es immer wieder notwendig, auf ein konstruktives Basiselement in einem Winkel von etwa 90° ein Stegelement anzuordnen und die beiden Elemente fest miteinander zu verbinden. Typischerweise sind dies Schweißverbindungen, wobei das Stegelement auf die Oberlläche des Basiselementes aufgesetzt und die beiden Elemente mit einer Schweißnaht verbunden werden.

Derartige Schweißnähte sind teuer in der Herstellung und zeitaufwendig. Insbesondere bei der Massenherstellung sollen Schweißnähte möglichst vermieden wenden. Überdies haben Schweißnähte den Nachteil, dass sie nicht lösbar sind, sodass einmal verschweißte Metallkonstruktionen nur mehr in zerstörender Weise demontiert werden können. Große Konstruktionselemente wie zB Brückentragwerksträger sind sehr schwer und schlecht transportierbar.

So zeigt z.B. die WO 2008/014765 eine Hochwasserschutzwand mit Standsäulen, die eine Auflagefläche für das Hochwasser stauende Wandelemente bilden. Die Standsäulen weisen von einer am Boden befestigbare Bodenplatte ausgehende Gurte auf, die mit einem Stegelement durch Schweißen verbunden sind. In hochwassertreien Perioden wird die Hochwasserschutzwand demontiert und muss gelagert werden. Die Standsäulen nehmen dabei ein unvorteilhaft großes Lagervolumen in Anspruch.

Die Veröffentlichung FR-A-2 330 898 beschreibt ein System zur Verbindung eines Metallprofils mit einem Stegelement, wobei das Metallprofil eine Haltenut mit Hinterschneidung aufweist, in die ein Halteflansch des Stegelements eingeschoben ist. Ein Klemmelement fixiert das Stegelement in der Haltenut.

Aufgabe ist es, aus dem Stand der Technik bekannte Verbindungen der eingangs genannten Art zu verbessern und eine derartige Verbindung vorzusehen, die kostengünstig ist, eine feste Verbindung gewährleistet und sowohl im Herstellungsbetrieb als auch vor Ort leicht montierbar sind. Weiters sollen Materialkombinationen wie zB Metall-Nichtmetall oder Stahl-Aluminium herstellbar sein, die nicht verschweißbar sind.

Die Aufgabe wird durch eine Verbindung mit den Merkmalen des Anspruches 1 gelöst.

Die Halteflansche sind an den Stegelementteilen einfach und kostengünstig durch Abkantung herstellbar. Durch Aneinanderlegen der Stegelementteile ist das Stegelement rasch zusammensetzbar und kann in die Haltenut eingeschoben werden, wo es durch die Halteflansch eine feste Verbindung gewährleistet. Montage und Demontage ist einfach vor Ort durchführbar, wobei die demontierten Verbindungsteile raumsparend gelagert werden können.

In bevorzugter Weise ist das Siegelement von wenigstens einer Halteschraube fixiert. Dabei kann die Halteschraube von der Rückseite des Basiselements durch dessen Material in den Bereich der Haltenut oder deren Hinterschneidung einschraubbar sein. Wenn die Halteschraube ein angespitztes Ende aufweist, kann diese vorteilhaft zum Verklemmen des Stegelementes oder der Stegelemente dienen. Das Klemmelement kann auch ein in die Haltenut einsetzbarer Keil sein. Weiters kann das Klemmelement auch ein von der Rückseite des Bauelementes einschlagbarer Nagel sein.

Bevorzugt sind die Stegelementteile miteinander verschraubbar oder vernietbar.

Die Erfindung betrifft auch eine unter Verwendung der zuvor beschriebenen Verbindung errichtbare Standsäule zur Aufnahme von Fassadenetementen und dabei insbesondere zur Ausbildung von Dammbauten, wie ste zB im Hochwasserschutz eingesetzt werden. Solche Standsäulen haben üblicherweise eine mit dem Boden befestigbare Bodenplatte und zwei nach oben gerichtete Gurte, die durch ein Stegelement miteinander verbunden und versteift sind.

Es ist eine weitere Aufgabe der Erfindung aus dem Stand der Technik bekannte Standsäulen zu verbessern und eine Standsäule zu schaffen, die kostengünstig ist, eine feste Verbindung gewährleistet und sowohl im Herstellungsbetrieb als auch vor Ort leicht montierbar ist.

Diese Aufgabe wird durch eine Standsäule mit den Merkmalen des Anspruches 12 gelöst.

Die Halteflansche sind an den Stegelementtellen einfach und kostengünstig durch Abkantung herstellbar. Durch Aneinanderlegen der Stegelementteile ist das Stegelement rasch zusammensetzbar und kann in die Haltenut eingeschoben werden, wo es durch die Halteflansche eine feste Verbindung gewährleistet. Montage und Demontage ist einfach vor Ort durchführbar, wobei die demontierten Verbindungsteile raumsparend gelagert werden können.

Die Bodenplatte, die beiden Gurte und eine obere Abdeckung sind zur Ausbildung eines umlaufenden Rahmens miteinander verbunden, bevorzugt verschraubt. In der Praxis hat sich vorteilhaft gezeigt, wenn die Gurte ein Alu-Profil und die Stegelementteile oder das Stegelement aus abgekanteten Stahlblech bestehen, wobei die Abkantungen der Stahibleche die Halteflansche bilden. Bevorzugt sind die Verbindung und die Standsäulen durch Lösen der Verschraubungen zerlegbar.

Die erfindungsgemäße Verbindung ist für alle Materialien geeignet, de genügend Festigkeit aufweisen oder durch Verspreizen verfestigt werden können. Die Verbindung kann im Metallbau, Kunststoffbau und auch Holzbau verwendet werden. Materialmixe sind möglich wie zB Aluprofile als Basiselemente und Stahlbleche als Stegelemente. Die einzelnen Elemente können auch aus verschiedenen Materialien bestehen. So ist es möglich, als Stegelemente Holz- oder Kunststoffplatten vorzusehen und an den Kanten dieser Platten Metallprofile mit den seitlich abstehenden Halteflanschen anzuordnen, sodass höhere Festigkeit gegeben ist.

Wenn es aus Gründen der Dichtheit oder der Festigkeit notwendig ist, können etwaige Hohlräume in der Haltenut und zwischen dem Basiselement und dem/den Stegelementen mit Gießharz oder Schaum ausgefüllt werden, wobei Klemmelemente auch entfallen können.

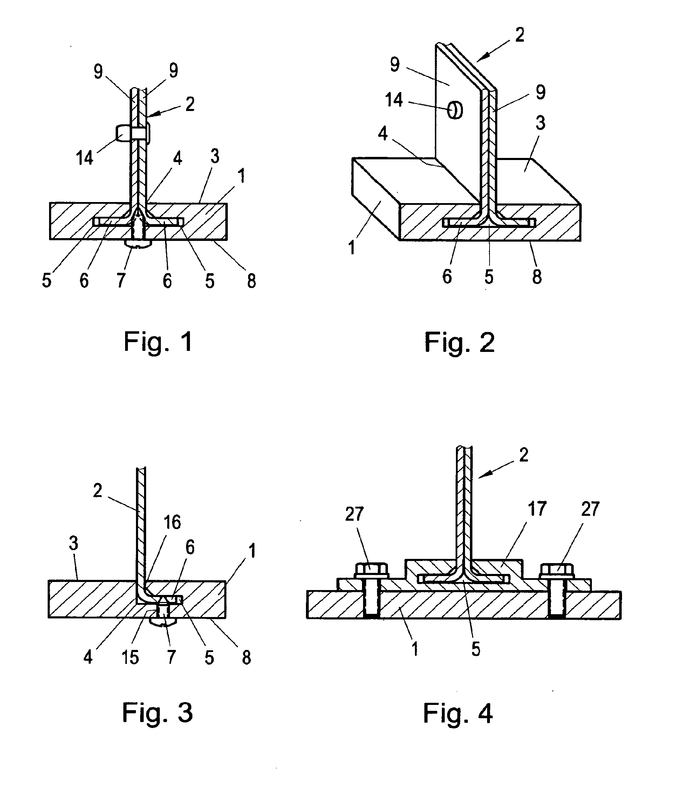

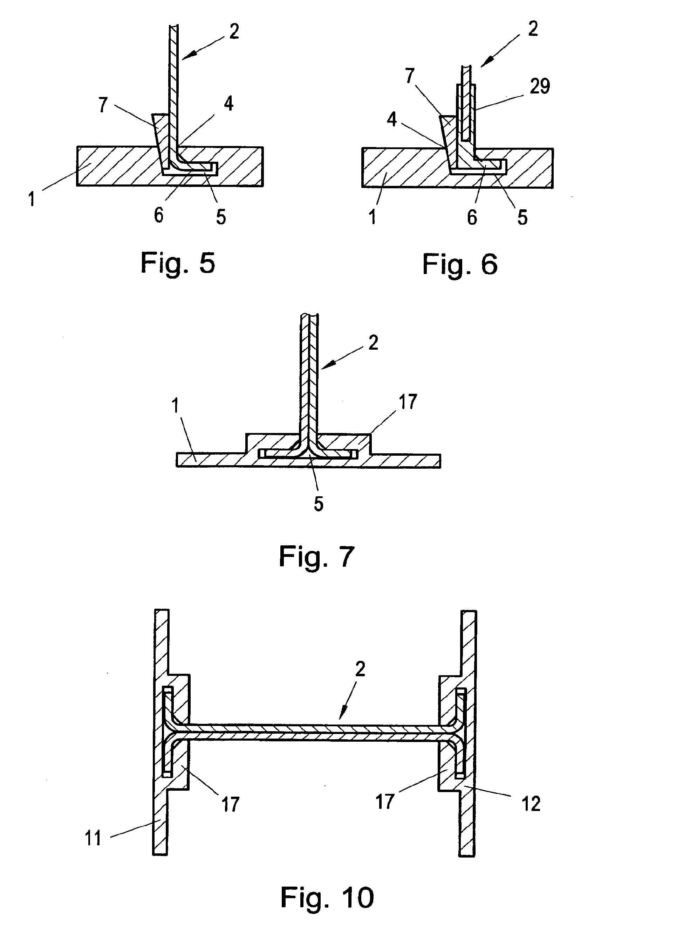

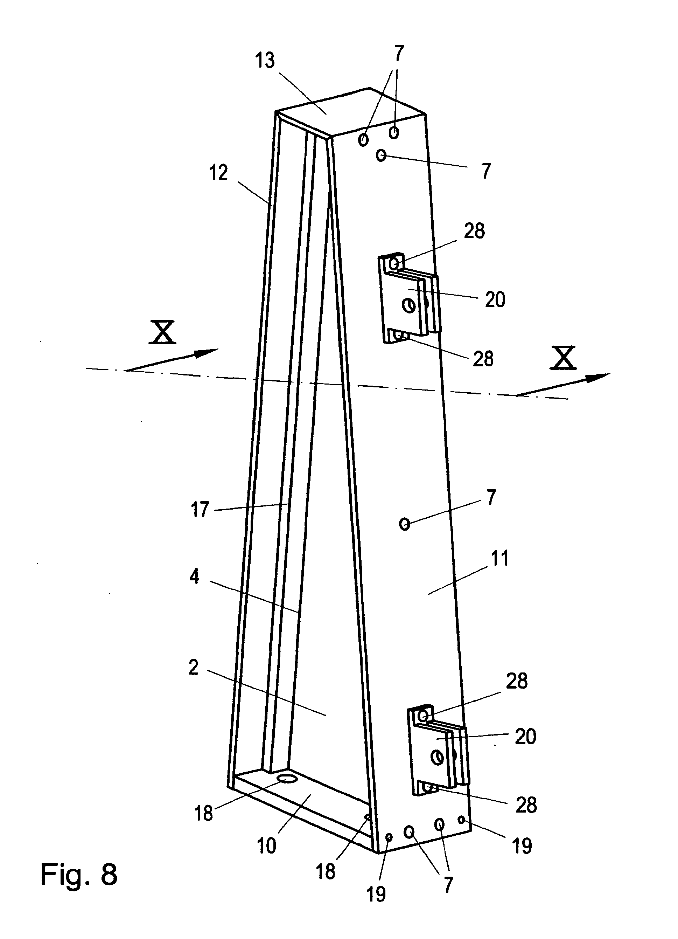

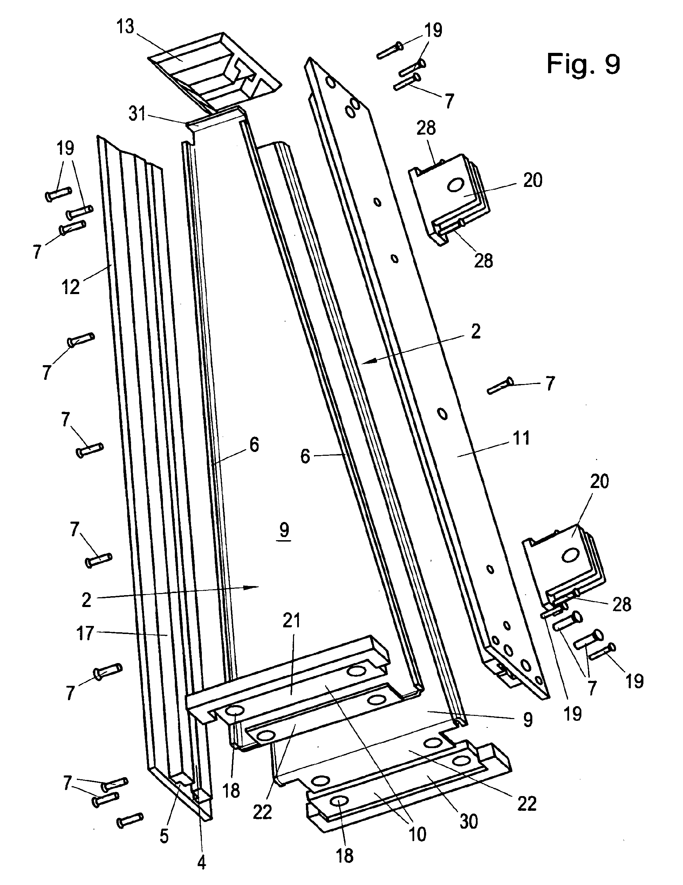

Im nachfolgenden wird die Erfindung in einigen Ausführungsbeispielen anhand der Zeichnungen näher erläutert. Fig. 1 ist ein Schnitt durch ein erstes Ausführungsbeispiel für die erfindungsgemäße Verbindung. Die Fig. 2 zeigt eine Schrägansicht einer so ausgebildeten fertigen Verbindung. Fig. 3 ist ein Schnitt durch eine Verbindung, die nicht Gegenstand der Erfindung ist und Fig. 4 und 7 zeigen Ausführungsformen des Basiselementes. Die Figuren 5 und 6 zeigen Kelle als Klemmelemente, jedoch an Verbindungen, die nicht Gegenstand der Erfindung sind. Fig. 8 ist die Schrägansicht einer erfindungsgemäßen Standsäule und Fig. 9 die gleiche Standsäule in Explosionsdarstellung. Fig. 10 zeigt einen Schnitt nach der Linie X-X in Fig. 8.

Die Fig. 1 und 2 zeigen eine bevorzugte Ausführung der erfindungsgemäßen Verbindung. Das Basiselement 1 ist hier eine Platte, bevorzugt aus Metall, die eine genügend große Wandstärke und Festigkeit aufweist, dass über einen entsprechenden Längenabschnitt die Haltenut 4 mit der Hinterschneidung 5 ausgebildet sein kann. In der Haltenut 4 und zugehöriger Hinterschneidung 5 sitzt das Stegelement 2, wobei die Halteflansche 6 in die Hinterschneidung 5 eingreifen.

In der Ausführungsform gemäß Fig. 1 besteht das Stegelement 2 aus zwei aneinanderliegenden Stegelementtellen 9, wobei jedes von ihnen mit je einem Halteflansch 6 versehen ist. Die Halteflansche 6 sind voneinander weggerichtet und demzufolge ist auch die Hinterschneidung 5 zu beiden Seiten der Haltenut 4 vorgesehen.

Da die Stegelemente oder Stegelementteile bei der Herstellung der Verbindung in die Haltenut 4 und deren Hinterschneidung 5 eingeschoben oder durch die Hattenut eingefädelt werden müssen, sind die Dicke der Haltenut und die Dimension der Hinterschneidung 5 so ausgebindet, dass für das Stegelement ein ausreichendes Spiel vorgesehen ist. Zur Herstellung einer steifen Verbindung werden Klemmelemente 7 vorgesehen, die im vorliegenden Fall eine Halteschraube mit angespitztem Ende sind. Es versteht sich von selbst, dass entlang der Hallenut eine entsprechende Anzahl von Klemmelementen vorgesehen sein können. Die bevorzugte und dargestellte Anordnung der Klemmelemente ist derart, dass sie von der Rückseite 8 des Basiselements 1 derart positioniert werden, dass das zugespitzte Ende gegen die Kanten der beiden Stegelementteile und mit der Anspitzung auch zwischen die beiden Stegelementteile drückt. Das Stegelement wird damit fest in der Haltenut und der Hinterschneidung mit dem Basiselement verspreizt, wodurch sich eine sehr stabile Verbindung ergibt.

Die Stegelementteile 2 können zB durch Fixierelemente 14 wie Schrauben oder Nieten miteinander verbunden werden.

Das Basiselement 1 kann in der Konstruktionstechnik vielfältige Formen haben. Beispiele sind die nachstehend beschriebenen Gurte von Standsäulen, tragende Fassadenteile, Gehäusewände und dergleichen. Die Stegelements können die Wirkung von stützenden oder versteifenden Verbindungsteilen oder auch die Funktion einer Auskleidung und dergleichen haben. Die erfindungsgemäße Verbindung dient grundsätzlich dem Verbinden von zwei Flachenelementen in einem Winkel zueinander.

Im vorliegenden Ausführungsbeispiel schließen die Vorderseite 3 und das Stegelement immer einen Winket von 90° ein. Dies kann aber auch ein anderer Winkel sein, wobei entweder die Hinterschneidung 5 im Basiselement 1 schräg eingearbeitet ist oder alternativ können auch die Flansche 6 den entsprechenden Winkel gegenüber dem plattenförmigen Teil der Stegelemente oder Stegelementteile aufweisen.

Die Halteflansche 6 sind in Fig. 2 als durchgehende Abkantungen des Stegelements dargestellt. Diese Halteflansche können aber auch abschnittweise vorgesehen werden.

Die Klemmelemente 7 sind hier als Schrauben dargestellt. Bevorzugt sind es selbstschneidende Schrauben, die in entsprechend vorgebohrte Löcher eingesetzt und eingedreht werden. Eine in der Praxis ebenfalls bekannte Alternative sind Nägel, die von der Rückseite 8 des Basiselements an entsprechender Stelle eingeschlagen werden. Nagelschussapparate sind im Handel erhältlich und erlauben ein besonders rasches Arbeiten.

Die in der Haltenut und/oder deren Hinterschneidung 5 verbleibenden Hohlräume können gewünschtenfalls durch ein Dicht- oder Füllmaterial ausgefüllt werden, um beispielsweise den Eintritt von Wasser in den Hohlraum zu verhindern oder, um die Festigkeit zu erhöhen, wobei das Material auch eine Klebewirkung aufweisen kann. Entsprechende Gießharze oder Füll- und Klebeschäume sind in der Bauindustrie bestens bekannt. Die Harze oder Schäume können nach dem Aushärten als Klemmelement dienen.

Die Fig. 3 zeigt eine nicht der Erfindung entsprechende Verbindung, wobei das Basiselement 1 eine Haltenut 4 aufweist, von der sich nur nach einer Seite hin die Hinterschneidung 5 erstreckt Das Stegelement 2 ist einteilig und weist eine Plattendicke auf, die in die Haltenut 4 passt. Der Halteflansch 6 erstreckt sich in Richtung der Hinterschneidung 5. Auch hier ist das Halteelement 7 als selbstschneidende Schraube dargestellt, die in das Schraubloch 15 eingeschraubt ist. Nach dem Einschrauben der Halteschraube ist das Stegelement insbesondere gegen die Kante 16 verklemmt, wodurch eine sehr feste Verbindung erzielt wird.

Die Ausbildung der Kante 16 kann abgerundet oder angefast sein, wodurch es ermöglicht wird, die Haltenut 4 eng zu halten und trotzdem den Halteflansch 6 in die Hinterschneidung 5 einzufädeln. Bei entsprechender Dimensionierung ist es daher möglich, die Stegelemente oder Stegelementteils auch bei Vorliegen größerer Kantenlängen einzuhängen und zu fixieren. Alternativ dazu ist es möglich, das Stegelement oder die Stegelementteile über die Länge der Haltenut einzuschieben.

Fig. 4 zeigt eine erfindungsgemäße Ausbildung des Basiselementes, wobei für die Ausbildung der Haltenut mit der Hinterschneidung ein eigenes Aufnahmeelement 17 vorgesehen ist. Dieses Aufnahmeelement 17 kann gemäß Fig. 7 einstückig mit dem Basiselement sein und zB ein gezogenes Aluminiumprofil sein. Das Aufnahmeelement 17 kann aber auch getrennt hergestellt und mittels Befestigungsmittel 27 mit der Platte des Basiselementes 1 verbunden sein.

In der nicht erfindungsgemäßen Verbindung gemäß Fig. 5 und 6 ist das Klemmelement 7 als Keil ausgebildet, welcher in die Haltenut 4 entlang des Stegelements 2 eingeschlagen oder eingedrückt wird. Der Keil kann als keilförmige Leiste entlang der Haltenut 4 oder auch als Aufeinanderfolge mehrerer Keile vorgesehen sein. Die Klemmelemente können auch als mit dem Basiselement 1 oder dem Stegteil 2 drehbar verbundene Drehklemmen ausgeführt sein, wie sie in der Befestigungstechnik wohlbekannt sind. Die Ausbildung gemäß Fig. 6 zeigt eine Variante, wonach der Halteflansch 6 aus einem vom Material des Stegelementes 2 verschiedenen Material besteht. Der Halteflansch 6 besteht zB aus Metall und verfügt über einen durch die Haltenut 4 ragenden Aufnahmeschenkel 29, der das Stegelement 2 oder ein Stegelementteil aufnimmt. So kann das Stegelement zB aus Kunststoff oder Holzfaserplatte bestehen. Auch ein Spritzgußteil aus Kunststoff kann für die Teile 6 und 29 vorteilhaft sein. Anstelle des keilförmigen Klemmelementes 7 können auch andere Klemmelemente wie Schrauben oder Nägel und dergleichen Verwendung finden. Die Halteflansche 6 und die zugehörige Haltenut 4 müssen sich nicht über die gesamte Länge des Basiselementes erstrecken, sondern können auch abschnittweise vorgesehen sein. Es ist auch möglich, die erfindungsgemäßen Verbindungen in sich kreuzender Anordnung vorzusehen, wodurch sehr fesle und doch leichte Bauelemente gebildet werden können.

Die Fig. 8 zeigt ein Anwendungsbeispiel für die erfindungsgemäße Verbindung zur Herstellung einer Standsäule. Solche Standsäulen sind auf einem festen Boden befestigte Säulen oder Steher, die dazu dienen, Fassadenelemente aufzunehmen und festzuhalten. Solche Fassadenelemente können beispielsweise quer liegende Balken für den Dammbau im Hochwasserschutz sein oder auch Zäune, Schneeabweiser. Wasserbeckenumrandungen, Wände zum Abhalten von Schüttgut, etc. Solche Standsäulen werden überall dort sinnvoll sein, wo von der Standsäule größere Querkräfte aufgenommen werden müssen.

An der Basis ist eine Bodenplatte 10 vorgesehen, die mit dem Boden oder einem entsprechend befestigten Bauwerk verbunden werden kann. Für Schraubverbindungen sind Schraublöcher 18 eingezeichnet. Ausgehend von der Bodenplatte 10 sind zwei nach oben gerichtete Gurte vorgesehen, nämlich ein Obergurt 11 und ein Untergurt 12. Die beiden Gurte sind über das Stegelement 2 mittels erfindungsgemäßer Verbindungen verbunden. Bevorzugt sind die Gurte gezogene Aluminiumprofile mit Ausbildung der Aufnahmeelemente 17 zur Aufnahme der Halterul 4.

Am oberen Ende ist eine obere Abdeckung 13 vorgesehen. Mittels Befestigungsschrauben 19 sind die Bodenplatte 10, die beiden Gurte 11, 12 und die Abdeckung 13 miteinander verschraubt, sodass ein fester umlaufender Rahmen vorliegt. Eine weitere Verfestigung der Standsäule ergibt sich durch die Anordnung des Stegelementes 2 und zugehörige Klemmelemente 7, 28 wie nachstehend noch näher beschrieben ist. Der Obergurt 11 trägt noch Führungsteile 20 für die Aufnahme und Befestigung von Fassadenelementen, die hier aber zur Erfindung nichts beitragen und daher fortgelassen sind. Der Obergurt 11 und Untergurt 12 bilden mit dem Stegelement 2 Verbindungen gemäß Erfindung, wobei die beiden Gurte die Basiselemente darstellen.

Die Fig. 9 zeigt in einer Explosionsdarstellung die einzeinen Teile, aus denen die Standsäule gemäß Fig. 8 zusammengesetzt ist. Gleiche Teile tragen gleiche Bezugszeichen, wobei auch die einzelnen Merkmale der zuvor beschriebenen Verbindung gleich gekennzeichnet sind.

Wie der Fig. 9 entnehmbar ist, setzt sich die Bodenplatte 10 aus einem linken Teil 21 und einem rechten Teil 30 zusammen. Die beiden Stegelementteile 9 weisen nicht nur die Halteflansche 6 auf, sondern am unteren Rand auch je einen Bodenflansch 22, der den zugehörigen Teil der Bodenplatte untergreift. Der obere Flansch 31 greift in die obere Abdeckung 13 ein.

Die Klemmelemente 28 sind als Schrauben ausgebildet und dienen auch der Befestigung der Führungsteile 20 am Obergurt 11. Aus Kosiergründen vorteilhaft ist, dass die Gurte 11, 12 und die obere Abdeckung 13 aus einem Metallprofil geschnitten werden können.

Die Fig. 10 zeigt einen Schnitt nach der Linie X-X in Fig. 8 und veranschaulicht die Anordnung der erfindungsgemäßen Verbindung zwischen Stegelement 2 und zwei Basiselementen, die durch die beiden Gurte 11 und 12 gebildet sind.

## Patentansprüche

1. Verbindung zwischen
- einem Basiselement (1) zur Bildung von Gurten von Standsäulen, tragenden Fassadenteilen, Gehäusewänden und dergleichen
- und einem davon abstehenden Stegelement (2), das als versteifendes Verbindungsteil wirkt, wobei
- das Basiselement an einer Vorderseite (3) eine Haltenut (4) mit einer Hinterschneidung (5) nach wenigstens einer Seite der Nut aufweist,
- das Stegelement (2) plattenförmig mit einer in die Haltenut (4) passenden Plattendicke ist, einen in die Haltenut und die Hinteirschneidung eingeschobenen Halteflansch (6, 22, 31) aufweist undvon wenigstens einem Klemmelement (7, 28) fixiert ist,
**dadurch gekennzeichnet, dass** das Stegelement (2) aus zwei aneinander liegenden Stegelementteilen (9) mit je einem Halteflansch (6) zusammengesetzt ist, wobei die Halteflansche (6) voneinander weggerichtet in die Hinterschneidung (5) zu beiden Seiten der Haltenul (4) eingreifen und als durchgehende oder abschnittsweise vorgesehene Abkantungen des Stegelements (2) ausgebildet sind.

2. Verbindung nach Anspruch 1, **dadurch gekennzeichnet, dass** das Klemmelement (7, 28) eine Halteschraube ist und von der Rückseite (8) das Basiselements (1) durch dessen Material in den Bereich der Haltenut (4) oder deren Hinterschneidung (5) einschraubbar ist

3. Verbindung nach Anspruch 1 oder 2, **dadurch gekennzeichnet, dass** die Halteschraube ein angespitztes Ende zum Verklemmen des/der Stegelement(e) aufweist.

4. Verbindung nach Anspruch 1, **dadurch gekennzeichnet, dass** das Klemmelement (7) ein von der Vorderseite (3) in die Haltenut einsetzbarer Keil ist.

5. Verbindung nach Anspruch 1, **dadurch gekennzeichnet, dass** das Klemmelement (7) ein von der Rückseite (8) des Basiselementes einsetzbarer oder einschlagbarer Nagel ist.

6. Verbindung nach Anspruch 1, **dadurch gekennzeichnet, dass** das Klemmelement durch in die Hallenut eingebrachtes und erstarrtes Gießharz oder Schaum gebildet ist.

7. Verbindung nach einem der Ansprüche 1 bis 6, **dadurch gekennzeichnet, dass** die Stegelementteile (9) durch ein ober mehr Fixierelemente (14) miteinander verbunden, bevorzugt verschraubt oder vernietet sind.

8. Verbindung nach einem der Ansprüche 1 bis 7, **dadurch gekennzeichnet, dass** das Basiselement (1) ein tragendes Teil einer Gebäudefassade oder der Gurt (11, 12) einer Standsäule ist und das oder die Stegelemente (2) zur Auskleidung oder Versteifung vorgesehen sind.

9. Verbindung nach einem der Ansprüche 1 bis 8, **dadurch gekennzeichnet, dass** die Haltenut (4) und Hinterschneidung (5) zumindest teilweise mit Dicht- oder Füllmaterial gefüllt ist.

10. Verbindung nach einem der Ansprüche 1 bis 9, **dadurch gekennzeichnet, dass** die Haltenut (4) in einem Halteelement (17) angeordnet ist, welches mit dem Basiselement fest verbindbar oder verbunden ist.

11. Verbindung nach einem der Ansprüche 1 bis 10, **dadurch gekennzeichnet, dass** der Halteflansch (6) einen davon winkelig abstehenden Aufnahmeschenkel (29) zur Aufnahme und Befestigung eines plattenförmigen Stegelements oder Stegelementteiles aufweist.

12. Standsäule zur Aufnahme von Fassadenelementen, insbesondere zur Ausbildung von Dammbauten, wobei ausgehend von einer am Boden befestigbaren Bodenplatte (10) zwei nach oben gerichtete Gurte (11,12) vorgesehen sind, die durch ein Stegelement (2) miteinander verbunden und versteift sind, **dadurch gekennzeichnet, dass** jeder der einander zugewandten Gurte (11, 12) an seiner Innenfläche eine Haltenut (4) mit einer Hinterschneidung (5) nach wenigstens einer Seile der Nut aufweist,
- das Stegelement (2) plattenförmig mit einer in die Haltenut (4) passenden Plattendicke ist, einen in die Haltenut und die Hinterschneidung eingeschobenen Halteflansch (6) aufweist und von wenigstens einem Klemmelement (7,28) fixiert ist, und
- das Stegellement (2) aus zwei aneinander liegenden Stegelementteilen (9) mit je einem Halteflansch (6) zusammengesetzt ist, wobei die Halteflansche (6) voneinander weggerichtet in die Hinterschneidung (5) zu beiden Seiten der Haltenut (4) eingreifen und als durchgehende oder abschnittsweise vorgesehene Abkantungen des Stegelements (2) ausgebildet sind.

13. Standsäule nach Anspruch 12, **dadurch gekennzeichnet, dass** die Bodenplatte (10), die beiden Gurte (11, 12) und eine obere Abdeckung (13) zur Ausbildung eines umlaufenden Rahmens miteinander verbunden, bevorzugt verschraubt sind.

14. Standsäule nach Anspruch 12 oder 13, **dadurch gekennzeichnet, dass** die beiden Gurte (11, 12) Alu-Profile und die Stegelementteile (9) oder Stegelemente (2) abgekantete Stahlbleche sind, wobei die Abkantungen der Stahlbleche die Halteflansche (622, 31) bilden.

15. Standsäule nach einem der Ansprüche 12 bis 14, **dadurch gekennzeichnet, dass** die Verbindung und die Standsäulen durch Lösen der Klemmelemente und gegebenenfalls auch der Fixierelemente (14) zerlegbar sind.

## Claims

1. A connection between
- a base element (1) for the formation of chords of upright columns, parts of facades, house walls and suchlike
- and a web element (2) projecting therefrom which acts as is a reinforcing connecting part, wherein
- the base element comprises, at a front side (3), a retaining groove (4) with an undercut (5) on at least one side of the groove,
- the web element (2) is plate-shaped with a plate thickness fitting into the retaining groove (4), comprises a retaining flange (6, 22, 31) inserted into the retaining groove and the undercut and is fixed by at least one clamping element (7, 28),
**characterised in that** the web element (2) comprises two adjacent web element parts (9) with in each case a retaining flange (6), wherein the retaining flanges (6) engage, directed away from one another, into the undercut (5) on both sides of the retaining groove (4) and are constituted as canted edges of the web element (2) which are continuous or provided in sections.

2. The connection according to claim 1, **characterised in that** the clamping element (7, 28) is a retaining screw and can be screwed from the rear side (8) of the base element (1) through its material into the region of the retaining groove (4) or its undercut (5).

3. The connection according to claim 1 or 2, **characterised in that** the retaining screw comprises a pointed end for clamping of the web element(s).

4. The connection according to claim 1, **characterised in that** the clamping element (7) is a wedge which can be inserted from the front side (3) into the retaining groove.

5. The connection according to claim 1, **characterised in that** the clamping element (7) is a nail which can be inserted or knocked in from the rear side (8) of the base element.

6. The connection according to claim 1, **characterised in that** the clamping element is constituted by solidified casting resin or foam introduced into the retaining groove.

7. The connection according to any one of claims 1 to 6, **characterised in that** the web element parts (9) are connected, preferably screwed or riveted, to one another by means of one or more fixing elements (14).

8. The connection according to any one of claims 1 to 7, **characterised in that** the base element (1) is a supporting part of a building facade or of the chord (11, 12) of an upright column and the web element or elements (2) are provided for lining or reinforcement.

9. The connection according to any one of claims 1 to 8, **characterised in that** the retaining groove (4) and the undercut (5) are filled at least partially with sealing or filling material.

10. The connection according to any one of claims 1 to 9, **characterised in that** the retaining groove (4) is disposed in a retaining element (17), which can be connected or is connected rigidly to the base element.

11. The connection according to any one of claims 1 to 10, **characterised in that** the retaining flange (6) comprises a receiving leg (29), projecting from the latter at an angle, for receiving and fixing a plate-shaped web element or web element part.

12. An upright column for mounting facade elements, in particular for constituting dam constructions, wherein, proceeding from a base plate (10) fixed to the ground, two upwardly directed chords (11, 12) are provided, which are connected to one another by a web element (2) and are reinforced, **characterised in that** each of the chords (11, 12) facing towards one another comprises, at its inner surface, a retaining groove (4) with an undercut (5) on at least one side of the groove,
- the web element (2) is plate-shaped with a plate thickness fitting into the retaining groove (4), comprises a retaining flange (6) inserted into the retaining groove and the undercut and is fixed by at least one clamping element (7, 28), and
- the web element (2) comprises two adjacent web element parts (9) with in each case a retaining flange (6), wherein the retaining flanges (6) engage, directed away from one another, into the undercut (5) on both sides of the retaining groove (4) and are constituted as canted edges of the web element (2) which are continuous or provided in sections.

13. The upright column according to claim 12, **characterised in that** the base plate (10), the two chords (11, 12) and an upper cover (13) are connected, preferably screwed, to one another to form a peripheral frame.

14. The upright column according to claim 12 or 13, **characterised in that** the two chords (11, 12) are aluminium profiles and the web element parts (9) or web elements (2) are canted steels plates, wherein the canted edges of the steel plates form the retaining flanges (6, 22, 31).

15. The upright column according to any one of claims 12 to 14, **characterised in that** the connection and the upright columns can be dismantled by releasing the clamping elements and if need be also the fixing elements (14).

## Revendications

1. Assemblage entre
- un élément de base (1) destiné à former des membrures de colonnes sur pied, des éléments de façade porteurs, des parois de boîtier et similaires,
- et un élément de pontage (2) faisant saillie à partir de celui-ci et servant de pièce d'assemblage de renfort, dans lequel
- du côté avant (3), l'élément de base comporte une rainure de maintien (4) avec une contre-dépouille (5) correspondant à au moins un côté de la rainure,
- l'élément de pontage (2) est conçu en forme de plaque, avec une épaisseur de plaque adaptée à la rainure de maintien (4), une bride de retenue (6, 22, 31) insérée dans la rainure de maintien et la contre-dépouille, tout en étant fixé par au moins un élément de serrage (7, 28),
**caractérisé en ce que** l'élément de pontage (2) est constitué de deux parties d'élément de pontage (9) adjacentes avec une bride de retenue (6) respective, les brides de retenue (6) s'engageant dans la contre-dépouille (5) des deux côtés de la rainure de maintien (4) en s'écartant l'une de l'autre, tout en étant conçues comme des replis de l'élément de pontage (2), prévus en continu ou par tronçons.

2. Assemblage selon la revendication 1, **caractérisé en ce que** l'élément de serrage (7, 28) est une vis de maintien et peut être vissé par le côté arrière (8) de l'élément de base (1), à travers le matériau de celui-ci, dans la région de la rainure de maintien (4) ou de la contre-dépouille (5) de celle-ci.

3. Assemblage selon la revendication 1 ou 2, **caractérisé en ce que** la vis de maintien présente une extrémité taillée en pointe pour le serrage du/des élément(s) de pontage.

4. Assemblage selon la revendication 1, **caractérisé en ce que** l'élément de serrage (7) est une clavette insérable dans la rainure de maintien par le côté avant (3).

5. Assemblage selon la revendication 1, **caractérisé en ce que** l'élément de serrage (7) est un clou apte à être inséré ou planté depuis le côté arrière (8) de l'élément de base.

6. Assemblage selon la revendication 1, **caractérisé en ce que** l'élément de serrage est formé par une résine de moulage ou une mousse introduite dans la rainure de maintien et solidifiée.

7. Assemblage selon l'une des revendications 1 à 6, **caractérisé en ce que** les parties d'élément de pontage (9) sont reliées les unes aux autres, de préférence vissées ou rivetées, à l'aide d'un ou de plusieurs éléments de fixation (14).

8. Assemblage selon l'une des revendications 1 à 7, **caractérisé en ce que** l'élément de base (1) est une pièce de support d'une façade de bâtiment ou la membrure (11, 12) d'une colonne sur pied, et l'élément de pontage (2) ou les éléments de pontage est/sont prévu(s) pour l'habillage ou le renfort.

9. Assemblage selon l'une des revendications 1 à 8, **caractérisé en ce que** la rainure de maintien (4) et la contre-dépouille (5) sont au moins partiellement remplies avec un matériau d'étanchéité ou de remplissage.

10. Assemblage selon l'une des revendications 1 à 9, **caractérisé en ce que** la rainure de maintien (4) est agencée dans un élément de maintien (17) relié ou apte à être relié fermement à l'élément de base.

11. Assemblage selon l'une des revendications 1 à 10, **caractérisé en ce que** la bride de retenue (6) comporte une branche d'admission (29) faisant saillie de façon angulaire à partir de celle-ci, pour l'admission et la fixation d'un élément de pontage en forme de plaque ou d'une partie d'élément de pontage.

12. Colonne sur pied pour l'admission d'éléments de façade, en particulier pour la formation de barrages, dans laquelle il est prévu deux membrures (11, 12) orientées vers le haut en partant d'une plaque de base (10) apte à être fixée au sol, lesquelles sont reliées l'une à l'autre et renforcées par un élément de pontage (2), **caractérisée en ce que** dans sa surface intérieure, chacune des membrures (11, 12) tournées l'une vers l'autre comporte une rainure de maintien (4) avec une contre-dépouille (5) correspondant à au moins un côté de la rainure,
- l'élément de pontage (2) est conçu en forme de plaque avec une épaisseur de plaque adaptée à la rainure de maintien (4), comporte une bride de retenue (6) insérée dans la rainure de maintien et la contre-dépouille, et est fixé par au moins un élément de serrage (7, 28), et
- l'élément de pontage (2) est constitué de deux parties d'élément de pontage (9) adjacentes avec une bride de retenue (6) respective, les brides de retenue (6) s'engageant dans la contre-dépouille (5) des deux côtés de la rainure de maintien (4) en s'écartant l'une de l'autre, tout en étant conçues comme des replis de l'élément de pontage (2), prévus en continu ou par tronçons.

13. Colonne sur pied selon la revendication 12, **caractérisée en ce que** la plaque de base (10), les deux membrures (11, 12) et un revêtement supérieur (13) sont reliés entre eux, de préférence vissés les uns aux autres, pour former un cadre périphérique.

14. Colonne sur pied selon la revendication 12 ou 13, **caractérisée en ce que** les deux membrures (11, 12) sont des profilés en aluminium et les parties d'élément de pontage (9) ou les éléments de pontage (2) sont des tôles d'acier repliées, les replis des tôles d'acier formant les bride de retenue (6, 22, 31).

15. Colonne sur pied selon l'une des revendications 12 à 14, **caractérisée en ce que** l'assemblage et les colonnes sur pied peuvent être défaits en détachant les éléments de serrage et le cas échéant, également les éléments de fixation (14).
